# EUROPÄISCHE PATENTSCHRIFT

(11) **EP 0 751 319 B1**
(45) Veröffentlichungstag und Bekanntmachung des Hinweises auf die Patenterteilung: **10.11.1999**
(21) Anmeldenummer: 96110201.9
(22) Anmeldetag: 25.06.1996
(51) Int. Cl.: F16G 13/16

(54) **Schliessbügel für Kettengleider einer Energieführungskette**
Coupling bar for link of energy carrier supporting chain
Traverse de fermeture pour maillon de chaîne porteuse de lignes d'énergie

(30) Priorität: 26.06.1995 DE 19523105
(43) Veröffentlichungstag der Anmeldung: 02.01.1997
(73) Patentinhaber: MURRPLASTIK GmbH, SYSTEM-TECHNIK, D-71570 Oppenweiler (DE)
(72) Erfinder: Ehmann, Bruno, 73563 Mögglingen (DE); Funk, Rainer, 71543 Wüstenrot (DE)
(74) Vertreter: Jeck, Anton, Dipl.-Ing.

(56) Entgegenhaltungen:
- EP-A- 0 308 958
- EP-A- 0 499 809
- DE-A- 3 318 365
- DE-A- 3 613 431
- DE-A- 3 929 095
- US-A- 4 590 961
- US-A- 4 833 876

## Beschreibung

Die Erfindung betrifft einen Schließbügel für Kettenglieder einer Energieführungskette nach dem Oberbegriff des Anspruches 1.

Bei herkömmlichen Schließbügeln der eingangs genannten Art, wie sie z.B. in der DE 3 318 365 A1 beschrieben sind, sind die Schließbügel der angelenkten und benachbarten Kettenglieder mit Abstand zueinander angeordnet, so daß in den Innenraum der Energieführungskette Verunreinigungen gelangen können. Ein vergleichbarer Sachverhalt ist auch in der EP 499 809 A 1 beschrieben. Ferner ist in der DE 39 29 095 sowie der US-A-4 833 876 jeweils eine Energieführungskette beschrieben, bei denen der jeweilige Schließbügel eine Schürze und einen Abdeckkörper aufweist, so daß die benachbarten Schließbügel sich quer zur Energieführungskette überlappen und in diesem Bereich im wesentlichen verhindern, daß Verunreinigungen in den Innenraum der Energieführungskette gelangen. Da die axialen Stirnseiten der bekannten Schließbügel den Innenseiten der Seitenlaschen zugekehrt sind, entstehen in diesen Bereichen Spalte, die insbesondere aufgrund der Herstellungstoleranzen der einzelnen Kettenteile regelmäßig relativ groß sind, so daß Verunreinigungen, z.B. Staub, Abrieb der Kette und andere Kleinteile, die während der Bewegung der Kette in deren Innenraum gelangen können, zur Beschädigung der Gelenke und/oder der in der Kette angeordneten Energieleiter führen können.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Man erkennt, daß die Erfindung jedenfalls dann verwirklicht ist, wenn es sich um eine Energieführungskette handelt, die so beschaffen ist, daß auf ihrer Deckseite eine Vielzahl von Schließbügeln dicht aneinandergereiht und abstandsfrei zueinander angeordnet werden können, so daß keine Fugen, Spalten, Lücken oder andere Öffnungen gebildet werden, durch die in den Innenraum der Kette Verunreinigungen gelangen können. Dies gilt aber auch dann, wenn die Energieführungskette in Betrieb ist und um etwa 180° verschwenkt wird. Die die Deckseite der Energieführungskette bildenden und die Deckseiten der Laschen abdeckenden Schließbügel sind hierbei gegeneinander relativ verschiebbar, jedoch so (schuppenartig) angeordnet, daß zwischen jeweils zwei Schließbügeln sowie den Schließbügeln und Seitenlaschen praktisch kein Spalt entsteht.

Weitere zweckmäßige und vorteilhafte Ausgestaltungen der Erfindung gehen aus den Unteransprüchen hervor.

Bezüglich der Herstellung des vorgeschlagenen Schließbügels ist es zweckmäßig, wenn die Schürze sowie der Abdeckkörper mit dem Grundkörper einstückig ausgebildet sind. Allgemein können die Schürze und der Abdeckkörper auch separate Teile sein, die mit dem Grundkörper z.B. gelenkig verbindbar sind.

Eine weitere zweckmäßige Ausgestaltung der Erfindung sieht vor, daß sowohl die Schürze als auch der Abdeckkörper in vertikaler Draufsicht einen rechteckigen Außenumriß aufweisen, wobei die Deckseite des Abdeckkörpers in der gleichen Ebene liegt wie die Deckseite des Grundkörpers. Durch diese Maßnahme können Schließbügel besonders einfach hergestellt werden, die für Energieführungsketten mit im wesentlichen rechteckförmigen Querschnitt vorgesehen sind.

Eine weitere zweckmäßige Ausgestaltung der Erfindung sieht vor, daß die Deckseite der Schürze in bezug auf die Deckseite des Abdeckkörpers nach unten zu versetzt ist. In seiner Seitenansicht sieht der Schließbügel also so aus, als wäre er gekröpft. Dabei ist die Schürze so geformt und bemessen, daß sie abstandsfrei zum Abdeckkörper des benachbarten Schließbügels angeordnet ist. Im Rahmen dieses Erfindungsgedankens ist es besonders zweckmäßig, wenn die Außenseite des Schürzen-Querschnitts auf einem Kreis liegt, dessen Mitte durch die Schwenkachse der benachbarten und miteinander gelenkig verbundenen Kettenglieder definiert ist. Auf der konvexen Oberfläche der Schürze, die in ihrer Längsrichtung bogenförmig ist, stützt sich die untere Kante des benachbarten Abdeckkörpers ab, so daß zwischen den beiden Teilen eine spaltfreie Verbindung hergestellt wird. Da der Schließbügel regelmäßig aus Kunststoff hergestellt wird, können die beiden Teile in leichter Druckverbindung stehen. Im Überlappungsbereich der Schürze und des Abdeckkörpers ist die Deckseite der Energieführungskette doppelt abgedeckt. Zum einen durch die Schürze, die zwischen den Außenlaschen des benachbarten Kettengliedes angeordnet ist, und zum anderen durch den Abdeckkörper, der zum einen die Schürze und zum anderen auch die Energieführungskette deckseitig abdeckt, wobei die axialen Endseiten des Abdeckkörpers mit den Außenseiten der Laschen bündig zusammenfallen. Zudem sind in diesem Bereich auch Stufen und Absätze ausgebildet, und zwar sowohl in den Außenlaschen als auch im Abdeckkörper, wodurch verhindert wird, daß Verunreinigungen seitlich in den Innenraum der Energieführungskette gelangen können.

Die Erfindung betrifft auch ein Scharnier für einen derartigen Schließbügel. Dabei besteht das Scharnier aus in die freien Kanten der Außenlasche freiliegend angeformten, einander zugekehrten, mit Abstand zueinander angeordneten und die Schwenkachse des Schließbügels definierenden Vorsprüngen sowie aus seitlich in das eine Ende des Schließbügels geformten und jeweils einen Haken definierenden Ausnehmungen. Die Vorteile dieser Maßnahmen bestehen darin, daß der Schließbügel mit einem Werkzeug ohne Schieber gespritzt werden kann. Eine weitere Vereinfachung der Herstellung solcher Schließbügel kann ferner dann erreicht werden, wenn die am Schließbügel angeformten Haken zur Deckseite des Schließbügels hin offen sind. Dabei sind die Haken der Schließbügel bodenseitig voneinander durch eine zu den Haken hin geschlossene Kammer getrennt. Bezüglich der gelenkigen Verbindung des Schließbügels mit der zugeordneten Außenlasche ist es zweckmäßig, wenn die Aufnahmen des jeweiligen Hakens in ihrer Seitenansicht bogenförmige Öffnungen sind und wenn sie sich über mehr als 180° erstrecken.

Ein Ausführungsbeispiel der Erfindung ist in der Zeichnung schematisch dargestellt und wird im folgenden näher erläutert.

Es zeigen:
- Fig. 1: ein Kettenglied im Querschnitt,
- Fig. 2: das in Fig. 1 dargestellte Kettenglied in Seitenansicht und teilweise geschnitten,
- Fig. 3: das Scharnier des Schließbügels nach Fig. 1 vergrößert dargestellt,
- Fig. 4: das in Fig. 3 dargestellte Scharnier in einer anderen Position des Schließbügels,
- Fig. 5: den Schließbügel in vertikaler Draufsicht,
- Fig. 6: den in Fig. 5 dargestellten Schließbügel in Bodenansicht,
- Fig. 7: einen Schnitt entlang der Linie VII-VII nach Fig. 6,
- Fig. 8: eine Ansicht in Richtung des Pfeils VIII nach Fig. 5,
- Fig. 9: das Endstück des Schließbügels, wie es in Fig. IV dargestellt ist,
- Fig. 10: eine Ansicht in Richtung des Pfeilses X nach Fig. 9 und
- Fig. 11: einen Schnitt entlang der Linie XI-XI nach Fig. 9.

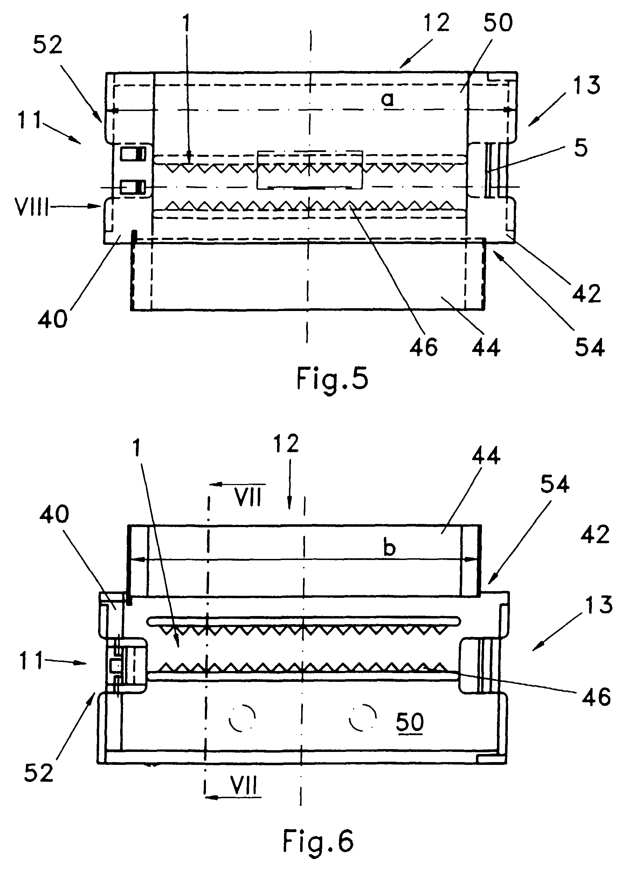

In den Figuren ist bzw. sind ein Schließbügel 12, 12' bzw. seine Teile dargestellt. Es handelt sich um einen Schließbügel für Kettenglieder 10 mit Außenlaschen 18 und 20 einer Energieführungskette. Der Schließbügel 12, 12' ist an der Außenlasche 18 des Kettengliedes 10 mittels eines Scharniers 11 angelenkt. Man erkennt, vgl. insbesondere Fig. 5 bis 8, daß der Schließbügel 12 einen in Längsrichtung des Schließbügels 12 sich erstreckenden Grundkörper 1 mit einer Schürze 44 aufweist, die an der einen Längsseite 54 des Grundkörpers 1 angeformt ist und in Richtung der Energieführungskette vorsteht. Ferner ist ein Abdeckkörper 50 vorgesehen, der an der anderen Längsseite 52 angeordnet ist und der im Schwenkbereich der benachbarten Kettenglieder die Schürze 44 des vom benachbarten und angelenkten Kettengliedes tragenden Schließbügels 44 abdeckt. Bei dem Schließbügel gemäß vorliegendem Ausführungsbeispiel handelt es sich um einen einstückigen Körper, der durch Spritzen herstellbar ist. Ferner ist zu erkennen (vgl. Fig. 5 und 6), daß sowohl die Schürze 44 als auch der Abdeckkörper 50 in vertikaler Draufsicht einen rechteckförmigen Außenumriß aufweisen, wobei die Deckseite des Abdeckkörpers 50 in der gleichen Ebene liegt wie die Deckseite des Grundkörpers 1.

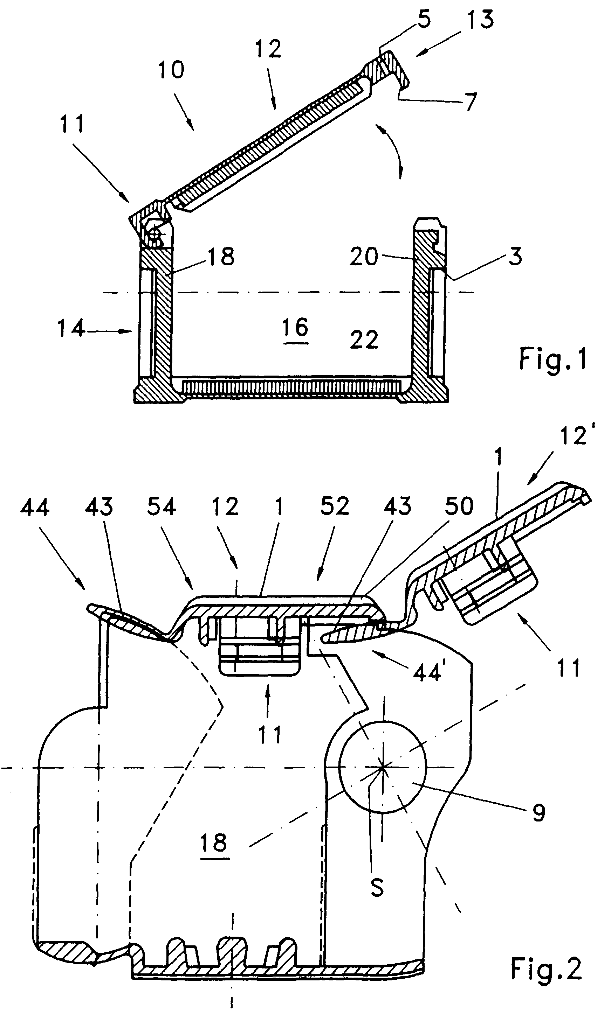

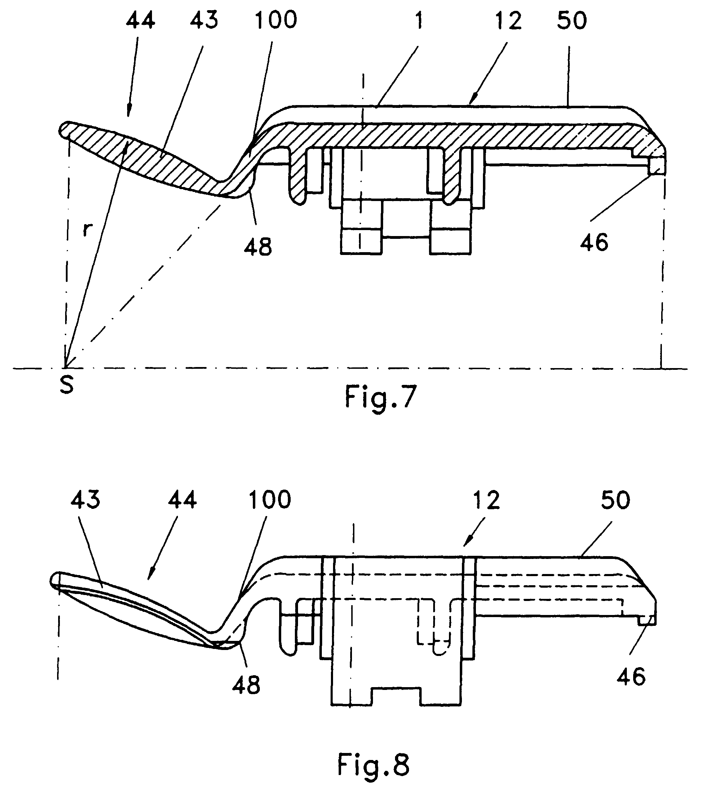

Die Fig. 2 läßt ferner erkennen, daß die Deckseite 43 der Schürze 44' in bezug auf die Deckseite des Abdeckkörpers 50 nach unten zu versetzt ist und daß die Schürze 44' abstandsfrei zum Abdeckkörper 50 angeordnet ist. Die Außenseite 43 des Schürzen-Querschnitts liegt auf einem Kreis mit einem Radius r (vgl. Fig. 7), dessen Mitte S durch die Schwenkachse der gelenkig miteinander verbundenen und benachbarten Kettenglieder definiert ist. Die Schürze 44' steht mit dem benachbarten Abdeckkörper 50 über ihre gesamte Länge in Kontakt und ist zwischen den Außenlaschen 18 und 20 des benachbarten und angelenkten Kettengliedes angeordnet. Ferner ist der Fig. 2 zu entnehmen, daß der Schließbügel 12 auf der Deckseite der ihn tragenen Außenlaschen 18 und 20 satt und annähernd dicht aufliegt, so daß die Schließbügel die Energieführungskette deckseitig vollständig und lückenlos abdecken. Das schuppenartige Ineinandergreifen jeweils zweier Schließbügel 12 und 12' ist in Fig. 2 angedeutet. Der Boden 22, die Außenlasche 18 und 20 sowie der Schließbügel 12 definieren den Innenraum 16 des Kettengliedes 10. Dabei ist der Schließbügel 12 in Richtung des Doppelpfeiles verschwenkbar, wobei sein anderes Ende 13 eine Nase 7 trägt, die mit einem Hinterschnitt 3 lösbar verbindbar ist. Um die Nase einfach spritzen zu können, ist in der Deckseite des Schließbügels 12 eine Öffnung 5 vorgesehen. Jeweils zwei Kettenglieder 10 sind über Gelenke 9 verbunden und gegeneinander um etwa 15° bis 40° verschwenkbar. Dieser Winkel kann jedoch nach Bedarf auch kleiner oder größer sein.

Die Fig. 5 und 6 lassen erkennen, daß die Länge a des Abdeckkörpers 50 größer ist als die Länge b der Schürze 44. Die Differenz der beiden Längen entspricht in etwa der doppelten Wandstärke einer Außenlasche 18 bzw. 20. Der Schließbügel 12 ist bodenseitig mit einander zugekehrten Zahn-Reihen 46 versehen, die auch im Boden 22 des Kettengliedes 10 ausgebildet und für Trennstege vorgesehen sind, die in etwa parallel zu den Außenlaschen 18 und 20 verlaufen.
Der Schließbügel ist dabei ferner so bemessen, daß er auf der Oberkante der mit ihm in Wirkverbindung stehenden Seitenlasche (praktisch abstandsfrei) aufliegt und sich vorzugsweise bis zur Außenseite der Lasche erstreckt, mit der er hier bündig abschließt. Auf diese Weise werden durchgehende Spalte, Schlitze oder ähnliche Öffnungen der Energieführungskette vermieden. Es handelt sich daher um eine rundum geschlossene Kette.

Die Fig. 7 und 8 lassen erkennen, daß die Außenseite 43 der Schürze 44 konvex, bogenförmig und so ausgebildet ist, daß sie einen Teil einer zylindrischen Fläche bildet, deren Radius r ist. Die Länge des Radius r entspricht dem Abstand der Mitte S (vgl. Fig. 2) bis zur Unterkante 46 des Abdeckkörpers 50, die nicht mit der Außenseite 43 in Kontakt steht. In ihrer Seitenansicht ist die Schürze 44 in bezug auf die Deckseite des Schließbügels 1 um die Länge des Trägers 100 versetzt und geneigt.

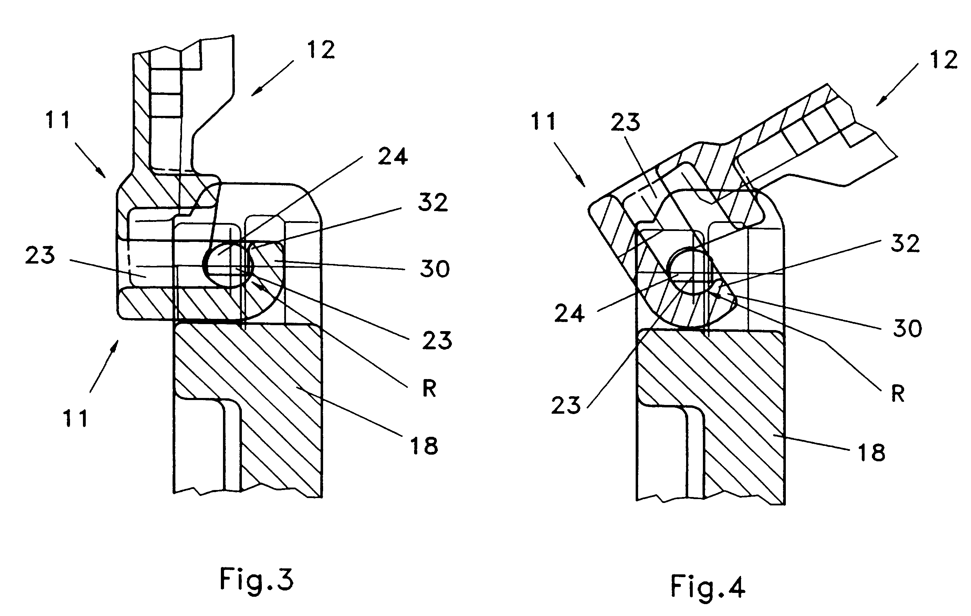

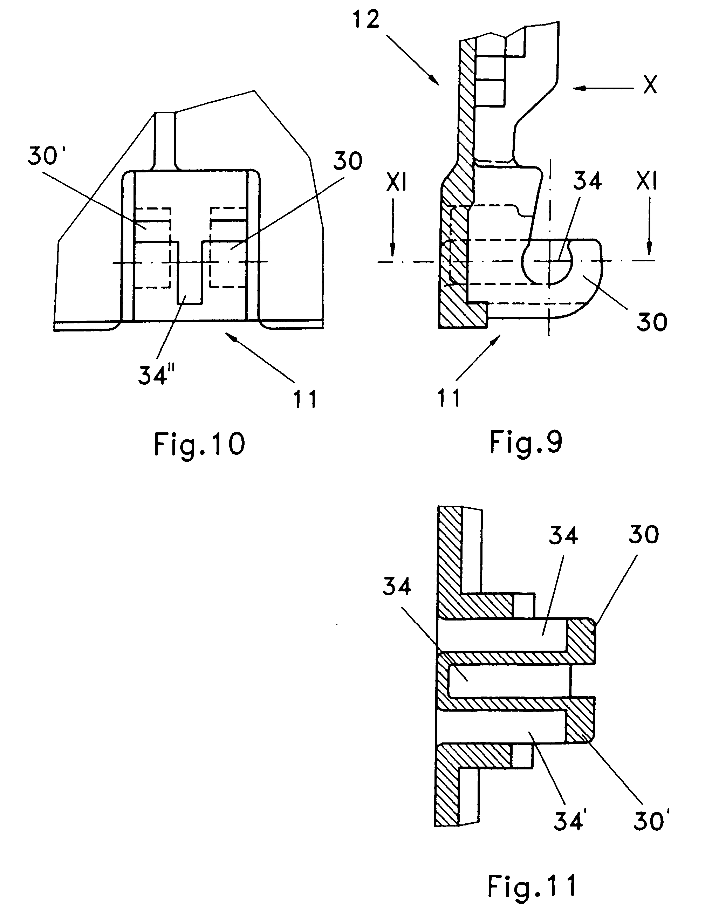

In den Fig. 3, 4 und 9 bis 11 ist das Scharnier 11 des Schließbügels dargestellt. Das Scharnier 11 besteht aus in die freien Kanten der Außenlasche 18 freiliegend angeformten, einander zugekehrten, mit Abstand zueinander angeordneten und die Schwenkachse 23 des Schließbügels 12 definierenden Vorsprüngen 24 sowie aus seitlich in das eine Ende des Schließbügels 12 geformten und jeweils einen Haken 30, 30' definierenden Ausnehmungen 34, 34'. Die am Schließbügel 12 geformten Haken 30 und 30' sind zur Deckseite des Schließbügels 12 hin offen. Die beiden Haken 30, 30' sind schließbügelbodenseitig voneinander durch eine zu den Haken 30, 30' hin geschlossene Kammer 34'' getrennt. Die Aufnahmen 34 und 34' des jeweiligen Hakens 30 und 30' sind in ihrer Seitenansicht bogenförmige Öffnungen, die sich über mehr als 180° erstrecken. Dabei haben die Öffnungen 34, 34' einen Innendurchmesser, der nur geringfügig größer ist als der Außendurchmesser der Vorsprünge 24. Das vorgeschlagene Scharnier ist daher so ausgebildet, daß es erlaubt, den Schließbügel um mindens 90° zu verschwenken, und zwar über die Außenkante der zugeordneten Außenlasche hinaus. Die auf dem Schließbügel sich befindenden Verunreinigungen fallen somit auch beim Ausschwenken des Schließbügels nicht in den Innenraum der Energieführungskette hinein.

Der entscheidende Vorteil des Schließbügels mit derartigen Haken besteht darin, daß keine Querschieber erforderlich sind. Die Nase 32 der Haken 30 ist so bemessen, daß der jeweilige Vorsprung 24 in der Ausnehmung festgehalten wird, wenn der Schließbügel nicht senkrecht zu den Außenlaschen verläuft.

## Patentansprüche

1. Schließbügel (12) für Außenlaschen (18,20) aufweisende Kettenglieder einer Energieführungskette, der an einer der Außenlaschen (18) des Kettengliedes (10) mittels eines Scharniers (11) anlenkbar ist, mit einem in Längsrichtung des Schließbügels (12) sich erstreckenden Grundkörper (1) mit einer Schürze (44), die an der einen Längsseite (54) des Grundkörpers (1) positioniert ist und in Richtung der Energieführungskette vorsteht, sowie einem Abdeckkörper (50), der an der anderen Längsseite (52) angeordnet ist und der im Schwenkbereich zweier benachbarter Kettenglieder die Schürze (44) des vom benachbarten und angelenkten Kettenglied getragenen Schließbügels (44) abdeckt,
dadurch gekennzeichnet,
daß der Schließbügel (12) auf der Deckseite der ihn tragenden Außenlaschen (18,20) aufliegt.

2. Schließbügel nach Anspruch 1,
dadurch gekennzeichnet,
daß die Schürze (44) sowie der Abdeckkörper (50) mit dem Grundkörper (1) einstückig ausgebildet sind.

3. Schließbügel nach Anspruch 1 oder 2,
dadurch gekennzeichnet,
daß sowohl die Schürze (44) als auch der Abdeckkörper (50) in vertikaler Draufsicht einen rechteckigen Außenumriß aufweisen.

4. Schließbügel nach einem der Ansprüche 1 bis 3,
dadurch gekennzeichnet,
daß die Deckseite des Abdeckkörpers (50) in der gleichen Ebene liegt wie die Deckseite des Grundkörpers (1).

5. Schließbügel nach einem der Ansprüche 1 bis 4,
dadurch gekennzeichnet,
daß die Deckseite (43) der Schürze (44') in bezug auf die Deckseite des Abdeckkörpers (50) nach unten zu versetzt ist.

6. Schließbügel nach einem der Ansprüche 1 bis 5,
dadurch gekennzeichnet,
daß die Schürze (44) abstandsfrei zum Abdeckkörper (50) des benachbarten Schließbügels (12) angeordnet ist.

7. Schließbügel nach einem der Ansprüche 1 bis 6,
dadurch gekennzeichnet,
daß die Außenseite (43) des Schürzen-Querschnitts auf einem Kreis liegt, dessen Mitte (S) durch die Schwenkachse der benachbarten Kettenglieder definiert ist.

8. Schließbügel nach einem der Ansprüche 1 bis 7,
dadurch gekennzeichnet,
daß die Schürze (44') mit dem benachbarten Abdeckkörper (50) über ihre gesamte Länge in Kontakt steht.

9. Schließbügel nach einem der Ansprüche 1 bis 8,
dadurch gekennzeichnet,
daß die Schürze (44) zwischen den Außenlaschen (18, 20) des benachbarten und angelenkten Kettengliedes angeordnet ist.

10. Schließbügel nach einem der Ansprüche 1 bis 9,
dadurch gekennzeichnet,
daß die Schließbügel (12) die Energieführungskette deckseitig vollständig abdecken.

11. Schließbügel nach einem der Ansprüche 1 bis 10,
dadurch gekennzeichnet,
daß jeweils zwei Schließbügel (12) benachbarter Kettenglieder schuppenartig ineinandergreifen.

12. Schließbügel nach einem der Ansprüche 1 bis 11,
dadurch gekennzeichnet,
daß das Scharnier (11) aus in die freien Kanten der Außenlasche (18) freiliegend angeformten, einander zugekehrten, mit Abstand zueinander angeordneten und die Schwenkachse (23) des Schließbügels (12) definierenden Vorsprüngen (24) sowie aus seitlich in das eine Ende des Schließbügels (12) geformten und jeweils einen Haken (30, 30') definierenden Ausnehmungen (34, 34') besteht.

13. Schließbügel nach Anspruch 12,
dadurch gekennzeichnet,
daß die am Schließbügel (12) angeformten Haken (30, 30') zur Deckseite des Schließbügels (12) hin offen sind.

14. Schließbügel nach einem der Ansprüche 1 bis 13,
dadurch gekennzeichnet,
daß die beiden Haken (30, 30') schließbügelbodenseitig voneinander durch eine zu den Haken (30, 30') hin geschlossene Kammer (34'') getrennt sind.

15. Schließbügel nach einem der Ansprüche 1 bis 14,
dadurch gekennzeichnet,
daß die Aufnahmen (34, 34') des jeweiligen Hakens (30, 30') in ihrer Seitenansicht bogenförmige Öffnungen sind und das sie sich über mehr als 180° erstrecken.

16. Schließbügel nach Anspruch 15,
dadurch gekennzeichnet,
daß die Öffnungen Innendurchmesser haben, die etwa dem Außendurchmesser der zylindrischen Vorsprünge entsprechen.

17. Energieführungskette,
gekennzeichnet durch
einen Schließbügel nach einem der Ansprüche 1 bis 16.

## Claims

1. Locking clamp (12) for chain links of an energy guide chain, which links have external lugs (18, 20), said clamp being pivotally mountable on one of the external lugs (18) of the chain link (10) by means of a hinge (11), said clamp having a basic body (1), which extends in the longitudinal direction of the locking clamp (12), having an apron (44) which is positioned on one longitudinal side (54) of the basic body (1) and protrudes in the direction of the energy guide chain, and having a cover body (50), which is disposed on the other longitudinal side (52) and covers the apron (44) of the locking clamp (12), which clamp is carried by the adjacent and pivotally mounted chain link, within the pivotal region of two adjacent chain links, characterised in that the locking clamp (12) lies on the upper surface of the external lugs (18, 20) which carry said clamp.

2. Locking clamp according to claim 1, characterised in that the apron (44) and the cover body (50) are configured to be integral with the basic body (1).

3. Locking clamp according to claim 1 or 2, characterised in that both the apron (44) and the cover body (50) have a rectangular external configuration when viewed vertically from above.

4. Locking clamp according to one of claims 1 to 3, characterised in that the upper surface of the cover body (50) lies in the same plane as the upper surface of the basic body (1).

5. Locking clamp according to one of claims 1 to 4, characterised in that the upper surface (43) of the apron (44') is downwardly offset relative to the upper surface of the cover body (50).

6. Locking clamp according to one of claims 1 to 5, characterised in that the apron (44) is disposed without any spacing from the cover body (50) of the adjacent locking clamp (12).

7. Locking clamp according to one of claims 1 to 6, characterised in that the external surface (43) of the apron cross-section is disposed around a circle, the centre (S) of which is defined by the pivotal axis of the adjacent chain links.

8. Locking clamp according to one of claims 1 to 7; characterised in that the entire length of the apron (44') is in contact with the adjacent cover body (50).

9. Locking clamp according to one of claims 1 to 8, characterised in that the apron (44) is disposed between the external lugs (18, 20) of the adjacent and pivotally mounted chain link.

10. Locking clamp according to one of claims 1 to 9, characterised in that the locking clamps (12) completely cover the upper surface of the energy guide chain.

11. Locking clamp according to one of claims 1 to 10, characterised in that two respective locking clamps (12) of adjacent chain links engage in each other in an imbricated manner.

12. Locking clamp according to one of claims 1 to 11, characterised in that the hinge (11) comprises projection members (24), which are provided so as to lie freely in the free edges of the external lug (18) and face each other, said projection members being disposed with a spacing therebetween and defining the pivotal axis (23) of the locking clamp (12), and comprises recesses (34, 34'), which are provided laterally in one end of the locking clamp (12) and each define a respective hook (30, 30').

13. Locking clamp according to claim 12, characterised in that the hooks (30, 30'), which are provided on the locking clamp (12), are open towards the upper surface of the locking clamp (12).

14. Locking clamp according to one of claims 1 to 13, characterised in that the two hooks (30, 30') are separated from each other at the lower end of the locking clamp by means of a chamber (34''), which is closed towards the hooks (30, 30').

15. Locking clamp according to one of claims 1 to 14, characterised in that the receivers (34, 34') for each hook (30, 30') are arcuate apertures when viewed laterally, and in that they extend over more than 180°.

16. Locking clamp according to claim 15, characterised in that the apertures have internal diameters which correspond substantially to the external diameter of the cylindrical projection members.

17. Energy guide chain, characterised by a locking clamp according to one of claims 1 to 16.

## Revendications

1. Traverse de fermeture (12) pour maillons présentant des éclisses extérieures (18, 20) d'une chaîne porteuse d'énergie, traverse qui par l'intermédiaire d'une charnière (11) est articulée sur une des éclisses extérieures (18) du maillon, avec un corps de base (1) s'étendant en direction longitudinale de l'étrier de fermeture (12), avec un tablier (44) qui est positionné sur un côté longitudinal (54) du corps de base (1) et qui fait protubérance en direction de la chaîne porteuse d'énergie, a ainsi qu'avec un corps de recouvrement (50) qui est disposé sur l'autre côté longitudinal (52) et qui dans la zone de pivotement de deux maillons voisins recouvre le tablier (44) de la traverse de fermeture (44) porté par le maillon voisin et relié à articulation,
caractérisée
en ce que la traverse de fermeture (12) est appliquée sur le côté de couverture des éclisses extérieures (18, 20) qui la portent.

2. Traverse de fermeture suivant la revendication 1,
caractérisée
en ce que le tablier (44) ainsi que le corps de recouvrement (50) constituent avec le corps de base (1) une seule pièce.

3. Traverse de fermeture suivant la revendication 1 ou la revendication 2,
caractérisée
en ce que tant le tablier (44) qu'également le corps de recouvrement (50) présentent, vus en plan, un contour extérieur rectangulaire.

4. Traverse de fermeture suivant l'une quelconque des revendications de 1 à 3,
caractérisée
en ce que le côté de couverture du corps de recouvrement (50) est situé dans le même plan que le côté de couverture du corps de base (1).

5. Traverse de fermeture suivant l'une quelconque des revendications de 1 à 4,
caractérisée
en ce que le côté de couverture (43) du tablier (44') est décalé vers le dessous par rapport au côté de couverture du corps de recouvrement (50).

6. Traverse de fermeture suivant l'une quelconque des revendications de 1 à 5,
caractérisée
en ce que le tablier (44) est disposé de manière non distante du corps de recouvrement (50) de la traverse de fermeture (12) voisine.

7. Traverse de fermeture suivant l'une quelconque des revendications de 1 à 6,
caractérisée
en ce que le côté extérieur (43) de la section transversale du tablier est situé sur un cercle, dont le centre (S) est défini par l'axe de pivotement des maillons de chaîne voisins.

8. Traverse de fermeture suivant l'une quelconque des revendications de 1 à 7,
caractérisée
en ce que le tablier (44' est en contact sur toute sa longueur avec le corps de recouvrement voisin (50).

9. Traverse de fermeture suivant l'une quelconque des revendications de 1 à 8,
caractérisée
en ce que le tablier (44) est disposé entre les éclisses extérieures (18, 20) du maillon de chaîne voisin relié à articulation.

10. Traverse de fermeture suivant l'une quelconque des revendications de 1 à 9,
caractérisée
en ce que côté couverture, les traverses de fermeture (12) recouvrent totalement la chaîne porteuse d'énergie.

11. Traverse de fermeture suivant l'une quelconque des revendications de 1 à 10,
caractérisée
en ce que chaque fois deux traverses de fermeture (12) de maillons voisins s'engagent l'une dans l'autre à la manière d'écailles.

12. Traverse de fermeture suivant l'une quelconque des revendications de 1 à 11,
caractérisée
en ce que la charnière (11) est constituée pat des protubérances (24) formées dans les arêtes libres de l'éclisse extérieure, protubérances se faisant face et distantes l'une de l'autre, et définissant l'axe de pivotement (23) de la traverse de fermeture (12), ainsi que par des évidements (34. 34') formés latéralement dans l'une des extrémités de la traverse de fermeture (12) et définissant chacune un crochet (30, 30').

13. Traverse de fermeture suivant la revendication 12.
caractérisée
en ce que les crochets (30. 30') formés sur la traverse de fermeture (12) sont ouverts vers le côté couverture de la traverse de fermeture (12).

14. Traverse de fermeture suivant l'une quelconque des revendications de 1 à 13,
caractérisée
en ce que les deux crochets sont. côté fond de la traverse de fermeture. séparés l'un de l'autre par une chambre (34") fermée en direction des crochets (30. 30').

15. Traverse de fermeture suivant l'une quelconque des revendications de 1 à 14.
caractérisée
en ce qu'en élévation latérale, les évidements de réception (34, 34') de chaque crochet sont des ouvertures arquées qui couvrent un arc de plus de 180°.

16. Traverse de fermeture suivant la revendication 15.
caractérisée
en ce que les ouvertures ont un diamètre intérieur qui correspond sensiblement au diamètre extérieur des protubérances cylindriques.

17. Chaîne porteuse d'énergie,
caractérisée par une traverse de fermeture suivant l'une quelconque des revendications de 1 à 16.
